**Europäisches Patentamt**

**European Patent Office**

**Office européen des brevets**

(19)

(11) Veröffentlichungsnummer: **0 210 421**
A1

(12) # EUROPÄISCHE PATENTANMELDUNG

(21) Anmeldenummer: 86108453.1

(22) Anmeldetag: 20.06.86

(51) Int. Cl.⁴: **B 60 T 13/12**
B 60 T 13/74, B 60 T 8/34

(30) Priorität: 23.07.85 DE 3526192

(43) Veröffentlichungstag der Anmeldung:
04.02.87 Patentblatt 87/6

(84) Benannte Vertragsstaaten:
AT DE FR GB IT SE

(71) Anmelder: ROBERT BOSCH GMBH
Postfach 50
D-7000 Stuttgart 1(DE)

(72) Erfinder: Hees, Gerhard, Dr. Dipl.-Ing.
Stuttgarter Strasse 90
D-7146 Tamm(DE)

(72) Erfinder: van Zanten, Anton, Dr. Dipl.-Ing.
Waldstrasse 15/2
D-7257 Ditzingen 1(DE)

(54) Bremsdruckverstärker bei Fahrzeugbremsanlagen.

(57) Bei einem Bremsdruckverstärker für Fahrzeugbremsanlagen, der insbesondere auch zur Realisierung von ABS-Funktionen einsetzbar ist, wird vorgeschlagen, in einem mittelbar vom Hauptbremszylinder beaufschlagten und mit dem Radbremszylinder verbundenen Druckraum ein verschiebliches Teil in Form eines Permanentmagneten (3) anzuordnen und den Druckraum so auszubilden, daß bei zunehmendem oder abnehmendem Bremsdruck vom Hauptbremszylinder gleichzeitig in der einen oder anderen Richtung anwachsend eine Potentialenergie-Umspeicherung erfolgt, wodurch eine radbremszylinderseitige Drucküberhöhung oder Druckabsenkung im Sinne einer Verstärkung möglich ist. Ferner kann durch eine zusätzliche, von einer elektrischen Erregerspule (19) realisierte magnetische Positionsbeeinflussung zur Erzeugung von ABS-Funktionen auf die Verstärkerwirkung des Bremsdruckverstärkers Einfluß genommen werden.

Fig.4

EP 0 210 421 A1

R. 20086 Sp
1890/ot/wi
23.4.85

**Firma Robert Bosch GmbH, 7000 Stuttgart 1**

**Bremsdruckverstärker bei Fahrzeugbremsanlagen**

Stand der Technik

Die Erfindung geht aus von einem Bremsdruckverstärker
nach der Gattung des Hauptanspruchs. Hydraulische Bremsanlagen, beispielsweise auch mit Mehrkreis-Tandem-
Hauptbremszylindern sind bekannt (DE-OS 27 23 734);
hierbei ist es auch bekannt, solchen Bremsanlagen
ABS-Funktionen zuzuordnen, beispielsweise in die Ausgangsbremsdruckleitungen zu den Radbremszylindern
elektrisch betätigbare Mehrwege-Magnetventile zu
schalten, die die gewünschten und erforderlichen ABS-
Steuerfunktionen realisieren. Im Fall einer Druckabsenkung schließen diese Magnetventile die jeweilige Druckleitung vom Hauptbremszylinder zu den angeschlossenen
Radbremszylindern und führen gegebenenfalls Druckmittel dem Rückfluß zu. Bei einem gewünschten Druckwiederanstieg wird dann die Verbindung zum Hauptbremszylin-

...

1890/ot/wi
23.4.85                    - 2 -

der wieder hergestellt, jeweils mit beliebigen Druckzeitverläufen und mit der Möglichkeit, auch Druckhaltefunktionen zu realisieren. Voraussetzung bei solchen
Fahrzeugbremsanlagen ist dabei stets das Vorhandensein
einer Energiequelle, die dem Hauptbremszylinder das
Bremsfluid unter hohem Druck zur Verfügung stellt, so
daß dieses dann nach Maßgabe der zu erzielenden Bremswirkung in die Druckleitungen zu den Radbremszylindern
eingesteuert werden kann. Erforderlich ist eine solche
separate Energiequelle, die üblicherweise eine Pumpe,
einen diese antreibenden Elektromotor und entsprechende
Druckschalter umfaßt, auch bei der Realisierung von ABS-
Funktionen, da bei den bisherigen elektrisch betätigbaren Mehrwege-Magnetventilen unter Druck stehendes
Bremsmittel oder Bremsfluid insoweit praktisch "verloren" geht und nachfolgend wieder auf den hohen Druck
zurückgepumpt werden muß, der für den Bremsvorgang erforderlich ist. Ferner ist es erforderlich, bei der Realisierung von ABS-Funktionen solche Systeme, die eine
Unterbrechung der Bremsleitungen und einen Abfluß des
in diesen befindlichen Druckmittels bewirken, sehr zuverlässig und fehlersicher auszulegen, damit bei einer
Fehlfunktion nicht die Gefahr besteht, daß zu viel unter hohem Druck stehendes Bremsmittel abgelassen oder
unter Umständen auch gar nicht mehr den Radbremszylindern zugeführt werden kann.

Im Bereich der Realisierung von ABS-Funktionen ist es
ferner bekannt (US-PS 3 690 736; US-PS 3 731 979),
einen parallelen Abzweig in der vom Hauptbremszylinder
zu den jeweiligen Radbremszylindern führenden Leitungen anzubringen und diesen Abzweig mit einem Raum zu

...

verbinden, der durch ein elektrisch betätigbares Zylinderkolbenaggregat je nach Ansteuerung einer Betätigungsspule gegen den Druck einer Feder veränderlich ist, so daß aus der Bremsleitung Druckvolumen entnommen und wieder zugeführt werden kann - sogenanntes Plunger-Grundprinzip. In diesem Fall bleibt der Bremskreis zwar ebenfalls geschlossen; es sind aber Mittel erforderlich, um die weitere Zufuhr von unter hohem Druck stehendem Bremsdruckfluid vom Hauptbremszylinder bei ABS-Funktionen zu unterbrechen, damit die Druckmittelentnahme durch den veränderlichen Raum überhaupt bis zu den Radbremszylindern wirksam werden kann. Diese Unterbrechung kann auch dadurch ermöglicht werden (US-PS 3 690 736), daß der zurückweichende Kolben gleichzeitig ein Kugelventil zur Bewirkung eines Verschlusses der Hauptbremszylinderzuleitung freigibt. Versagt das System allerdings an dieser Stelle, dann ist es nicht mehr möglich, vom Hauptbremszylinder aus, also durch Betätigung des Bremspedals, überhaupt einen Bremsdruck aufzubauen.

Der Erfindung liegt die Aufgabe zugrunde, einen aus nur einigen wenigen Teilen bestehenden Bremskraftverstärker von kompaktem Aufbau zu schaffen, der keine externe Energiequelle beispielsweise zu dem Aufbau eines überhöhten Bremsdrucks an den Radbremszylindern benötigt und gleichzeitig so aufgebaut ist, daß mit geringen Zusatzmitteln von diesem Bremskraftverstärker auch gewünschte ABS-Funktionsverläufe realisiert werden können, und zwar ohne Unterbrechung oder Auftrennung der Bremsleitungen zu den Radbremszylindern.

...

Vorteile der Erfindung

Die Erfindung löst diese Aufgabe mit den kennzeichnenden
Merkmalen des Hauptanspruchs und hat den Vorteil, daß
durch die Benutzung des Prinzips der lediglichen Umspeicherung einer Potentialenergie zur Bremsdruckerzeugung
bei gleichzeitig einfacher und robuster Bauweise ein
sowohl zuverlässiger als auch kostengünstiger Bremsdruckverstärker zur Verfügung gestellt werden kann, der
in der Lage ist, auch hohe Drücke zu erzeugen und ferner
den besonderen Vorteil aufweist, daß durch geringe zusätzliche Mittel, nämlich beim bevorzugten Ausführungsbeispiel durch Anordnung einer elektrischen Erregerspule, eine wirksame Druckmodulation sowohl für die gleichzeitige Realisierung von ABS-Funktionen durch den erfindungsgemäßen Bremskraftverstärker als auch dessen Einsatz bei der sogenannten Antriebsschlupfregelung (ASR) möglich macht, wenn also zur Vermeidung eines Durchdrehens
von Rädern einzelne Räder angebremst werden müssen.

Da der erfindungsgemäße Bremskraftverstärker keine externe Energiequelle benötigt, ist er kostengünstiger,
zuverlässiger und sicherer als herkömmliche Bremskraftverstärker; infolge der Verwendung nur einiger weniger
Teile ist er bei einfacher Bauweise einfach zu fertigen,
daher auch besonders wartungsarm, von kompaktem Aufbau
und störungssicher.

Die besonders einfache und kostengünstige Erweiterungsmöglichkeit für die Realisierung von ABS-Druckmodulationen ermöglicht die Ausbildung mit sogenanntem "integriertem ABS", wobei die ABS-Auslegung ohne zusätzli-

...

chen Aufwand für die Antriebsschlupfregelung geeignet
ist.

Ein weiterer Vorteil vorliegender Erfindung liegt darin,
daß für die Realisierung von ABS-Funktionen nur ein
geringer Druckmodulations-Energiebedarf erforderlich
ist, da der Druck des Bremsfluids vor der Verstärkung
moduliert wird; die Verstärkung ist im übrigen nicht
erschöpfbar und wirkt auch bei stillstehendem Motor.

Durch die in den Unteransprüchen aufgeführten Maßnahmen sind vorteilhafte Weiterbildungen und Verbesserungen
des im Hauptanspruch angegebenen Bremskraftverstärkers
möglich. Besonders vorteilhaft ist die Benutzung von
sich gegenseitig anziehenden Permanentmagneten im Druckraum des Bremskraftverstärkers zur Umspeicherung der
vorhandenen Potentialenergie, so daß diese entweder als
verstärkter Bremsfluiddruck an den Radbremszylindern
anliegt oder sich in Form eines vorgegebenen Wegabstandes zweier Magnete im Bremsdruckverstärker darstellt.

Zeichnung

Ausführungsbeispiele der Erfindung sind in der Zeichnung dargestellt und werden in der nachfolgenden Beschreibung näher erläutert. Es zeigen Fig. 1 ein erstes Ausführungsbeispiel eines magnetischen Druckverstärkers im Längsschnitt und Fig. 2 anhand eines Diagramms Druckverläufe über der Verschiebung des beweglichen Teils im Bremsdruckverstärker, Fig. 3 die mögliche Serienschaltung von Bremsdruckverstärkern auf

...

1890/ot/wi
23.4.85                    - 6 -            20086

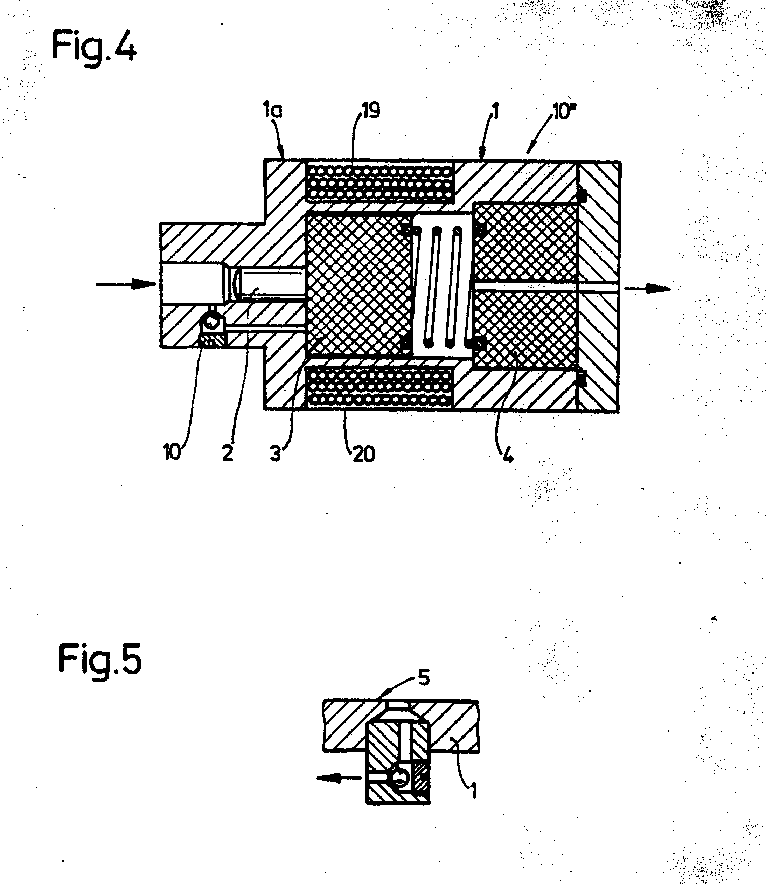

magnetischer Grundlage und Fig. 4 den Einsatz eines
Bremsdruckverstärkers mit zusätzlicher elektrischer
Erregerspule zur Druckmodulation für ABS und ASR und
Fig. 5 im größeren Detail eine mögliche Ausführungsform
eines Rückschlagventils, welches den Druckraum unmittelbar mit dem Bremsflüssigkeitsbehälter verbindet.


Beschreibung der Ausführungsbeispiele

Der Grundgedanke vorliegender Erfindung besteht darin,
an den Radbremszylindern in Abhängigkeit zum beispielsweise durch willkürliche Betätigung eines Bremspedals
eingeschalteten Bremsdruck einen vorgegebenen, verstärkten Bremsdruck dadurch zu erzeugen, daß von dem Prinzip
einer Potentialenergieumspeicherung Gebrauch gemacht
wird - genauer gesagt durch eine Abstandsbildung zweier
Permanentmagnete ergibt sich eine hohe Potentialenergie, die im Verlauf zunehmender Bremsdruckeinsteuerung
in am Radbremszylinder anliegende Bremsfluiddruck-
Potentialenergie umgewandelt wird und umgekehrt, mit
der ergänzenden Möglichkeit der zusätzlichen Beeinflussung der Permanentmagnetbewegung durch elektrische
Erregerspulen im Sinne der Realisierung von ABS- und
ASR-Funktionen.


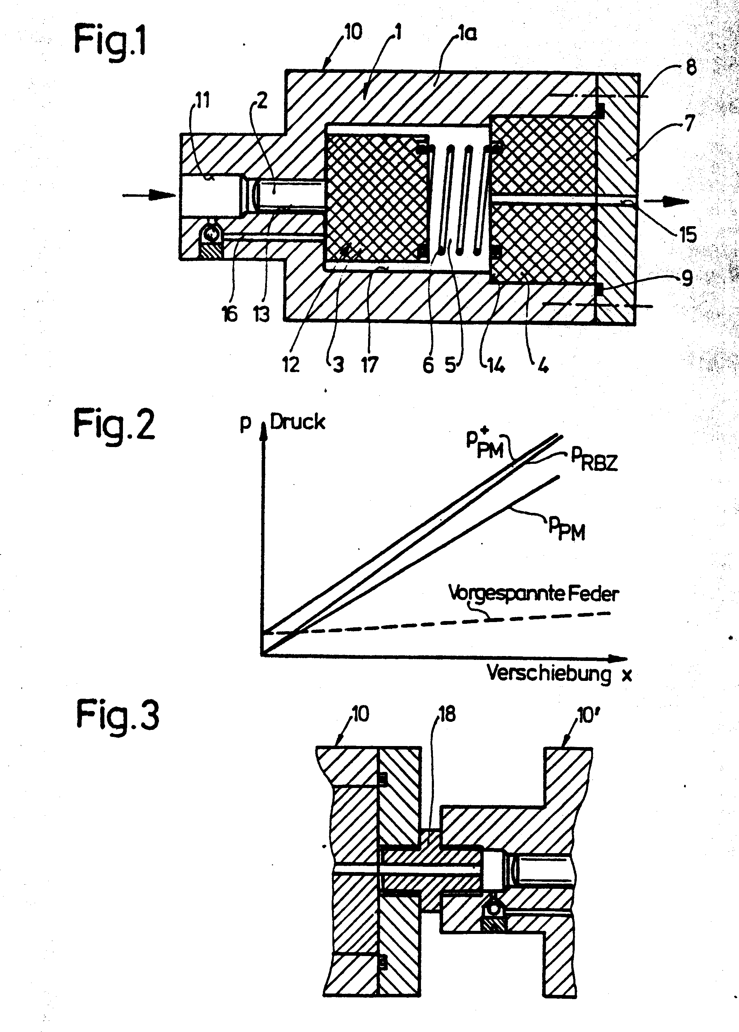

Das in Fig. 1 dargestellte System kann allgemein als
magnetischer Druckverstärker bezeichnet werden und
läßt sich im übrigen für verschiedene Druckerhöhungszwecke eines beliebigen Mediums einsetzen; handelt es
sich bei dem Medium um eine Bremsflüssigkeit, dann
wird diese bei dem in Fig. 1 mit 10 bezeichneten Bremsdruckverstärker einem Einlaßanschluß 11 zugeführt,
so daß an diesem Eingang der Bremsdruck vom Hauptbremszylinder ansteht. Der Bremsdruckverstärker 10 hat ein
Gehäuse 1, welches einen inneren Druckraum 5 bildet,
in welchem ein bewegliches Teil 12 angeordnet ist, bestehend aus einem in einer verjüngten Zylinderführung
13 gleitverschieblich geführten Kolben oder Plunger 2
und einem mit diesem fest verbundenen ersten Permanentmagneten 3, der beispielsweise die in der Fig. 1 angegebene Polarisierung aufweisen kann.

Das Gehäuse 1 ist vorzugsweise topfförmig ausgebildet
und durch einen Deckel 7 verschlossen,beispielsweise
durch bei 8 angedeutete, eingeschraubte Schrauben. Die
Abdichtung nach außen kann durch einen in eine Ringausnehmung im Deckel eingelegten O-Ring 9 geschehen. Ferner ist in der Topfform 1a des Gehäuses 1 ein zweiter
Permanentmagnet 4 aufgenommen und vorzugsweise durch
einen Ringschulteranschlag 14 gehalten. Eine vorgespannte Feder 6 hält die beiden Permanentmagnete 3 und
4 auseinander, wenn am Eingang 11 und am Ausgang 15,
bei dem dargestellten Ausführungsbeispiel der Fig. 1
gebildet durch eine den stationären Permanentmagneten
4 und den Abschlußdeckel 7 durchsetzende Bohrung, der
gleiche (Flüssigkeits)Druck des Bremsfluids (athmosphärischer Druck) herrscht.

Schließlich ist noch eine die abgedichtete Gleitführung des Kolbens 12 in der verjüngten Zylinderbohrung
13 umgehende Bypassleitung 16 mit einem dazwischengeschalteten Rückschlagventil 10 vorgesehen.

...

1890/ot/wi
23.4.85

Es ergibt sich dann folgende Grundfunktion des in Fig. 1 dargestellten Bremsdruckverstärkers. Der am Eingang anstehende Druck vom Hauptbremszylinder übt eine Kraft auf den Plunger oder Kolben 2 aus, der mit dem starken Permanentmagneten 3 fest verbunden ist und der im übrigen mit einem vorgegebenen Abstand zur inneren, den Druckraum 5 bildenden, vorzugsweise zylindrischen Ausnehmung 17 angeordnet ist. Der Permanentmagnet 3 wird vom stationären, ebenfalls besonders starken Permanentmagneten 4 angezogen, wobei die beiden Permanentmagneten aus einer möglichst hochwirksamen Materialzusammensetzung bestehen können, beispielsweise also Neodym oder Samariumkobalt mit hoher Koerzitivkraft. Der Druckraum 5, in welchem sich der Permanentmagnet 3 bewegt und der mit Bremsflüssigkeit gefüllt ist, ist über den Ausgangsanschluß 15 mit dem jeweils angeschlossenen Radbremszylinder verbunden.

Zunächst sei angenommen, daß die Anziehungskraft zwischen den beiden Permanentmagneten 3 und 4 null ist; in diesem Fall ist bei einer Bremsdruckerhöhung vom Hauptbremszylinder aus dieser Druck gleich groß dem sich entsprechend aufbauenden Druck im Radbremszylinder, da der Druckraum 5 durch den zunehmend in ihn eintretenden Kolben 2 eine Volumenverringerung erfährt. Durch die zwischen den beiden Permanentmagneten 3 und 4 bestehende Anziehungskraft ist jedoch der Druck im Radbremszylinder höher als der Druck im Hauptbremszylinder, und zwar umso höher, umso mehr der Permanentmagnet 3 auf den Permanentmagnet 4 zubewegt wird, da sich durch den sich verringernden Abstand die Anziehungskraft zwischen den Permanentmagneten erhöht. Dabei

...

gilt weiter, daß, je mehr der Permanentmagnet 3 sich auf
den Permanentmagneten 4 zubewegt, umso größer ist das
aus dem Druckraum 5 verdrängte Bremsflüssigkeitsvolumen
und umso höher ist der im Radbremszylinder sowie im
Druckraum 5 anstehende Druck. Die Anziehungskraft zwischen den Permanentmagneten 3 und 4 bewirkt also eine
zunehmend größer werdende Bremskrafterhöhung,      wobei
diese          im wesentlichen durch die Wahl der
Stärke der Permanentmagnete 3 und 4 und entsprechende
Dimensionsangaben gewählt und vorgegeben werden kann.

Entsprechend den in Fig. 2 gezeigten Druckverläufen läßt
sich im Prinzip die Anpassung bzw. Auslegung der Permanentmagnete, also der Permantmagnetstärke, an den gewünschten Verstärkungsfaktor entnehmen. In dem Diagramm
der Fig. 2 ist die Verschiebung des Permanentmagnets 3
in Richtung auf den Permanentmagneten 4 mit x bezeichnet,
die von der vorgespannten Feder zwischen den beiden Permanentmagneten 3 und 4 aufgebrachte  Kraft ist ihrem
Betrag nach als gestrichelter Kurvenverlauf dargestellt - tatsächlich ist das Vorzeichen der aufgebrachten Federkraft der sich entwickelten Magnetkraft
entgegengesetzt; mit $P^+_{PM}$ ist die Kraft zwischen dem
Permanentmagneten 3 und dem Permanentmagneten 4 als Verlauf über dem Verschiebeweg x, dividiert durch die Fläche des Plungers 2 angegeben; $P_{PM}$ bezeichnet die Kraft
zwischen dem Permanentmagneten 3 und dem Permanentmagneten 4, abzüglich der Federkraft, die auf die Permanentmagnete 3 und 4 wirkt, dividiert durch die Fläche
des Plungers 2 und mit $P_{RBZ}$ ist die Druckkennlinie des
Radbremszylinders bezeichnet.

1890/ot/wi
23.4.85                    - 10 -

Der Unterschied zwischen den Kennlinienverläufen $P_{RBZ}$ und $P_{PM}$ ist vom Hauptbremszylinder aufzubringen; je näher sich die Kurven $P_{RBZ}$ und $P_{PM}$ kommen, desto höher ist der Verstärkungsfaktor.

Das in Fig. 1 noch gezeigte, in der Bypassleitung 16 angeordnete Rückschlagventil 10 dient dem Ausgleich eines möglichen Bremsflüssigkeitsverlusts im Radbremszylinder - Möglichkeit des Nachsaugens von Druckmittel aus dem Hauptbremszylinder.

Die Darstellung der Fig. 3 zeigt, daß durch einen einfachen, zwischen Auslaßanschluß und Einlaßanschluß eines nachfolgenden Bremsdruckverstärkers angeordneten, Anpaßgliedes oder Fittings 18 auch eine Serienschaltung von Druckverstärkern, die dann vorzugsweise stets den gleichen Aufbau haben, möglich ist, so daß eine Steigerung des Verstärkungsfaktors erzielt werden kann.

Schließlich läßt sich der Darstellung der Fig. 4 entnehmen, daß praktisch bei Beibehaltung des bisher beschriebenen Aufbaus des Bremsdruckverstärkers durch zusätzliche Anordnung einer elektrischen Erregerspule 19, ausgerichtet auf die Position des beweglichen Permanentmagneten 3, auch eine Druckmodulation des Radbremsdrucks zur Realisierung von ABS-Funktionen und schließlich auch von ASR-Funktionen möglich ist. Die auf den Permanentmagneten 3 wirkende Erregerspule 19 kann in einer äußeren ringförmigen Ausdrehung 20 des topfförmigen Gehäuseteils 1a angeordnet werden, wobei durch einen entsprechend bemessenen und abgestimmten Strom in der Spule 19 auf die Position des Plungers 2 zu dessen Verlagerung eine Kraft ausgeübt werden kann.
Es ist daher möglich, den jeweiligen Druck im Radbremszylinder, ausgehend von dem Druck, der dem Druck im
Hauptbremszylinder entspricht, entsprechend abzusenken,
indem der Permanentmagnet in der Zeichenebene der
Fig. 4 nach links durch die von der elektrischen Spule
19 aufgebrachte elektromagnetische Kraft zurückgeführt
und damit im Bereich des Radbremszylinders eine Volumenvergrößerung erzielt wird. Es versteht sich, daß hierdurch beliebige Druckverläufe, auch im kontinuierlichen
Übergang und ohne abrupte Änderungen, wie sie üblicherweise durch das Umschalten von Magnetventilen sich ergeben, realisiert werden können.

Es ist ferner möglich, in ähnlicher Weise, und zwar
durch Umkehr der Speisestromrichtung zur elektrischen
Spule 19 den Druck im Radbremszylinder zu erhöhen, unabhängig vom am Einlaßanschluß anstehenden Druck vom
Hauptbremszylinder, so daß man auch selektiv ein vorgegebenes Rad dann abbremsen kann, wenn das Bremspedal
nicht betätigt wird; die Möglichkeit eines solchen
Bremseingriffs ist bei einer Antriebsschlupfregelung
von Bedeutung.

Das in Fig. 1 dargestellte Rückschlagventil 10 ist als
Kugelventil ausgebildet, wobei die Kugel von einer
Feder vorbelastet ist. Durch diese Feder wird die
Kugel auf ihren Sitz gedrückt, und zwar mit einer solchen vorgegebenen Kraft, daß beim Anbremsen anfänglich
keine Bremsflüssigkeit vom Anschluß des Hauptbremszylinders direkt über das Rückschlagventil in den Druckraum 5 strömen und damit die Verschiebung des Plungers 2

...

20086

1890/ot/wi
23.4.85                        - 12 -

verhindern kann. Ist einmal der Druck im Druckraum 5
höher als der Druck vom Hauptbremszylinder, dann ist
das Rückschlagventil 10 ohnehin in Sperrichtung vorbelastet.

Alternativ zu der Anordnung eines Rückschlagventils,
welches den Einlaßanschluß 11 mit dem Druckraum 5 verbindet, ist es, entsprechend der Teildarstellung der
Fig. 5, möglich, das Rückschlagventil auch so anzuordnen, daß es den Druckraum 5 unmittelbar mit einem nichtdargestellten Bremsflüssigkeitsbehälter verbindet; in
diesem Fall ist eine Feder im Rückschlagventil nicht
erforderlich, da durch die Druckerhöhung im Druckraum 5
das Ventil durch Anlage der Ventilkugel an ihrem Sitz
automatisch geschlossen wird.

Zusammenfassend beruht die Erfindung dabei auf dem Prinzip der Umspeicherung von Potentialenergie. Im ungebremsten Zustand verfügt der Permanentmagnet 3 gegenüber
dem Permanentmagneten 4 über eine hohe Potentialenergie,
die Bremsflüssigkeit im Radbremszylinder und in den
entsprechenden Zuleitungen dagegen über keine Potentialenergie. Beim Betätigen der Bremse verliert der Permanentmagnet 3 an Potentialenergie, die an der Bremsflüssigkeit im Radbremszylinder und in den Zuleitungen in
Form von Kompressionsarbeit abgegeben wird. Die Bremsflüssigkeit im Radbremszylinder speichert diese Energie
also wiederum als Potentialenergie. Wird dann umgekehrt
die Bremse wieder losgelassen, dann verliert die Bremsflüssigkeit diese Potentialenergie, die vom Permanentmagneten 3 wieder aufgenommen und in seine eigene,
wieder gespeicherte Potentialenergie umgesetzt wird,

...

1890/ot/wi
23.4.85

und zwar durch die zunehmende Abstandsgewinnung zum Permanentmagneten 4. Dies steht im Gegensatz zur Arbeitsweise eines herkömmlichen Bremskraftverstärkers, bei dem in der Bremsflüssigkeit im Radbremszylinder und in den Zuleitungen gespeicherte Potentialenergie bei der Expansion nicht zurückgewonnen werden kann, sodaß für einen solchen Bremskraftverstärker eine externe Energiequelle notwendig ist, die als Hilfsenergiequelle arbeitet. Der magnetische Druckverstärker vorliegender Erfindung benötigt durch die Anwendung des Umspeicherungsprinzips der Potentialenergie keine Energiequelle und muß lediglich Hystereseverluste ersetzen.

Alle in der Beschreibung, den nachfolgenden Ansprüchen und der Zeichnung dargestellten Merkmale können sowohl einzeln als auch in beliebiger Kombination miteinander erfindungswesentlich sein.

P. 20086 Sp
1890/ot/wi
23.4.85

Firma Robert Bosch GmbH, 7000 Stuttgart 1

Patentansprüche

1. Bremsdruckverstärker bei Fahrzeugbremsanlagen, insbesondere in Verbindung mit einem Antiblockierschutzsystem zur Realisierung von ABS-Funktionen, dadurch
gekennzeichnet, daß ein vom Bremsdruck mindestens
mittelbar beaufschlagter Druckraum (5) vorgesehen ist,
der mindestens über einen Auslaß (15) mit einem zugeordneten Radbremszylinder verbunden und ferner so
ausgebildet ist, daß mit zunehmendem bzw. abnehmendem Bremsdruck vom Hauptbremszylinder aus gleichzeitig in der einen oder anderen Richtung anwachsend
Potentialenergie zur radbremszylinderseitigen Drucküberhöhung oder Druckabsenkung umgespeichert wird.

2. Bremsdruckverstärker nach Anspruch 1, dadurch gekennzeichnet, daß im Druckraum (5) ein beweglicher Permanentmagnet (3) mit sich änderndem Abstand gegenüber
einem stationären Permanentmagneten (4) verschiebbar
gelagert ist.

3. Bremsdruckverstärker nach Anspruch 1 oder 2, dadurch gekennzeichnet, daß durch die relative Ver-

...

0210421

schiebbarkeit des ersten beweglichen Permanentmagneten (3) mit Bezug zum stationären Permanentmagneten
(4) Potentialenergie bei Annäherung der beiden Magneten aneinander in Form einer Druckerhöhung in den Bereich des Radbremszylinders abgegeben (umgespeichert)
wird und bei Beendigung einer Bremsung durch Expansion und Druckabgabe vom Bereich des Radbremszylinders in gespeicherte Potentialenergie des beweglichen
Permanentmagneten (3) rückgewonnen (rückgespeichert)
wird.

4. Bremsdruckverstärker nach einem der Ansprüche 1-3,
dadurch gekennzeichnet, daß in einem eine zylindrische
Ausnehmung (17) aufweisenden, abgeschlossenen Gehäuse
(1) mit Einlaßanschluß (11) und Auslaßanschluß (15)
in einer verengten Zylinderführung (13) des Gehäuses
ein Kolben oder Plunger (2) gleitverschieblich gelagert und dem vom Hauptbremszylinder kommenden Bremsdruck ausgesetzt ist und daß am Plunger (2) der
sich im Druckraum (5) befindende bewegliche Permanentmagnet (3) befestigt ist derart, daß sich bei ansteigendem Druck vom Hauptbremszylinder durch Annäherung der beiden Magneten (3, 4) gleichzeitig eine
Volumenverringerung im Druckraum (5) mit gegenüber
dem Druck vom Hauptbremszylinder durch die Anziehungskraft der beiden Magneten erhöhtem Druck am
Radbremszylinder ergibt.

5. Bremsdruckverstärker nach einem der Ansprüche 1-4,
dadurch gekennzeichnet, daß das Gehäuse (1) topfförmig ausgebildet ist mit kreiszylindrischer Innenbohrung (17), die den Druckraum (5) bildet und in

. . .

0210421

20086

welcher der bewegliche Permanentmagnet (3) mit Abstand zu den Wandungen vom Plunger (2) gehalten gleitverschieblich angeordnet ist und mit einem zweiten,
durch einen Anschlag (14) im Gehäuse gehaltenen stationären Permanentmagneten (4), der durcheinen die
Topfform (1a) des Gehäuses abschließenden Deckel unverrückbar gelagert ist sowie mit einer Rückstellfeder (6) zwischen den beiden Permanentmagneten
(3 und 4).

6. Bremsdruckverstärker nach einem der Ansprüche 1-5,
   dadurch gekennzeichnet, daß zwischen dem Druckraum
   (5) und dem Eingangsanschluß (11) eine ein einen
   Rückfluß vom Druckraum (5) zum Eingangsanschluß
   verhinderndes Rückschlagventil (10) enthaltende Bypassleitung (16) angeordnet ist.

7. Bremsdruckverstärker nach einem oder mehreren der
   Ansprüche 1-6, dadurch gekennzeichnet, daß zur Erhöhung des Verstärkungsfaktors mehrere Bremsdruckverstärker in Reihe geschaltet sind.

8. Bremsdruckverstärker nach einem der Ansprüche 1-7
   zur gleichzeitigen Realisierung von ABS-Funktionen
   - integriertes ABS, dadurch gekennzeichnet, daß angrenzend an die Position des beweglichen Permanentmagneten (3) im Gehäuse (1) eine elektrische Erregerspule angeordnet ist derart, daß je nach Stromrichtung eine zusätzliche magnetische Kraftbeaufschlagung auf den die Position des Plungers (2)
   bestimmenden und damit den Druck im Druckraum (5)
   und an den Radbremszylindern vorgebenden begwegli-

...

1890/ot/wi
23.4.85

- 4 -

chen Permanentmagneten (3) ausübbar ist zur Realisierung beliebiger ABS- und ASR-Funktionen, insbesondere auch im stetigen Übergang.

9. Bremsdruckverstärker nach einem der Ansprüche 1-8, dadurch gekennzeichnet, daß der Druckraum (5) über ein Rückschlagventil mit dem Bremsflüssigkeitsbehälter verbunden ist.

20086

0210421

**Fig.1**

**Fig.2**

**Fig.3**

## Fig.4

## Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-2 225 639 (D.B.A.) <br> * Seite 4, Zeile 21 - Seite 5, Zeile 22; Figur 1 * | 1 | B 60 T 13/12 <br> B 60 T 13/74 <br> B 60 T 8/34 |
| A | FR-A-1 566 598 (ETS POMPES GUINARD) | | |
| A | DE-A-1 043 729 (LEHNARD) | | |
| A | FR-A-2 412 443 (MACDONALD) | | |
| A,D | FR-A-2 391 885 (BOSCH) | | |
| A,D | US-A-3 731 979 (MIKAILA) | | RECHERCHIERTE SACHGEBIETE (Int Cl 4) |
| A,D | US-A-3 690 736 (SMIRL) | | B 60 T 13/02 <br> B 60 T 13/04 <br> B 60 T 13/10 <br> B 60 T 13/12 <br> B 60 T 13/16 <br> B 60 T 13/74 <br> B 60 T 8/06 <br> B 60 T 8/08 <br> H 01 F 7/02 |

Der vorliegende Recherchenbericht wurde für alle Patentansprüche erstellt.

| Recherchenort | Abschlußdatum der Recherche | Prüfer |
|---|---|---|
| DEN HAAG | 27-10-1986 | HARTEVELD C.D.H. |